Europäisches Patentamt

European Patent Office

Office européen des brevets

(19)

(11) **EP 1 372 000 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(51) Int Cl.:
***G01S 13/90*** *(2006.01)*

(21) Anmeldenummer: **03008673.0**

(22) Anmeldetag: **16.04.2003**

(54) **Verfahren zur Detektion sowie Geschwindigkeits- und Positionsschätzung von bewegten Objekten in SAR-Bildern**

Method for detection as well as for estimation of velocity and position of moving objects in SAR images

Procédé pour la détection et pour l'estimation de la vélocité et de la position d'un objet en mouvement dans des images SAR

(84) Benannte Vertragsstaaten:
**AT BE BG CH CY CZ DE DK EE ES FI FR GB GR HU IE IT LI LU MC NL PT RO SE SI SK TR**

(30) Priorität: **14.06.2002 DE 10226508**

(43) Veröffentlichungstag der Anmeldung:
**17.12.2003 Patentblatt 2003/51**

(73) Patentinhaber: **EADS Deutschland GmbH**
**85521 Ottobrunn (DE)**

(72) Erfinder: **Kirscht, Martin**
**88090 Immenstaad (DE)**

(74) Vertreter: **Meel, Thomas**
**Patentassessor**
**c/o EADS Deutschland GmbH**
**Patentabteilung FCL6**
**88039 Friedrichshafen (DE)**

(56) Entgegenhaltungen:
**DE-A- 19 618 155**

- **KIRSCHT M: "Detection and imaging of arbitrarily moving targets with single-channel sar" 2002 INT. RADAR CONFERENCE, 15. Oktober 2002 (2002-10-15), Seiten 280-285, XP010626878 LONDON**

- **KIRSCHT M ED - STEIN T I (ED) INSTITUTE OF ELECTRICAL & ELECTRONICS ENGINEERS: "DETECTION AND VELOCITY ESTIMATION OF MOVING OBJECTS IN A SEQUENCE OF SINGLE-LOOK SAR IMAGES" IGARSS 1996. INTERNATIONAL GEOSCIENCE AND REMOTE SENSING SYMPOSIUM : REMOTE SENSING FOR A SUSTAINABLE FUTURE. LINCOLN, NE, MAY 28 - 31, 1996, INTERNATIONAL GEOSCIENCE AND REMOTE SENSING SYMPOSIUM. IGARSS, NEW YORK, IEEE, US, Bd. VOL. 1, 28. Mai 1996 (1996-05-28), Seiten 333-335, XP000659604 ISBN: 0-7803-3069-2**

- **BARBAROSSA S ET AL: "DETECTION AND IMAGING OF MOVING OBJECTS WITH SYNTHETIC APERTURE RADAR. \PART 2: JOINT TIME-FREQUENCY ANALYSIS BY WIGNER-VILLE DISTRIBUTION" IEE PROCEEDINGS F. COMMUNICATIONS, RADAR & SIGNAL PROCESSING, INSTITUTION OF ELECTRICAL ENGINEERS. STEVENAGE, GB, Bd. 139, Nr. 1 PART F, 1. Februar 1992 (1992-02-01), Seiten 89-97, XP000257894 ISSN: 0956-375X**

- **ALPARONE L: "A FUZZY COMPLETE SAR PROCESSING CHAIN FOR SHIP DETECTION AND VELOCITY ESTIMATION" EUROPEAN TRANSACTIONS ON TELECOMMUNICATIONS AND RELATED TECHNOLOGIES, AEI, MILANO, IT, Bd. 2, Nr. 6, 1. November 1991 (1991-11-01), Seiten 689-693, XP000278632 ISSN: 1120-3862**

EP 1 372 000 B1

**Beschreibung**

Die Erfindung betrifft ein Verfahren zur Detektion sowie Geschwindigkeits- und Positionsschätzung von bewegten Objekten gemäß dem Oberbegriff des Patentanspruchs 1.

Stand der Technik

Bei der Gewinnung von Bildern aus SAR-Rohdaten (SAR, Synthetic Aperture Radar) entstehen prinzipbedingt Abbildungsfehler, wenn sich bewegte Objekte (z. B. Fahrzeuge, auch Bewegtziele genannt) in der Szene befinden. In Abhängigkeit von der Bewegungsrichtung der Objekte gibt es drei wesentliche Effekte [1]:

- Bei radialer Bewegung entsteht eine zusätzliche Dopplerverschiebung, die in einem Versatz des Objekts in positiver oder negativer Azimutrichtung, also in bzw. entgegengesetzt zur Flugrichtung der Radar-Antenne, resultiert. Diese Bewegung geht einher mit einer Geschwindigkeitskomponente in Rangerichtung (auch Entfernungsrichtung oder Cross-Track-Richtung), so dass diese Geschwindigkeitskomponente im einfach Rangegeschwindigkeit genannt wird.
- Bei großer Rangegeschwindigkeit verschwindet das Objekt im SAR-Bild.
- Bei Bewegung des Objekts in Azimutrichtung (Flugrichtung) verändert sich die Dopplerrate, wodurch das Objekt im SAR-Bild in Azimutrichtung verzerrt wird. In diesem Fall ist also eine Azimutkomponente (Along-track-Komponente) der Objektgeschwindigkeit vorhanden, die im kurz Azimutgeschwindigkeit genannt wird.

Weitere Effekte entstehen bei Beschleunigung des bewegten Objekts, die hier aber nicht näher betrachtet werden sollen. Um die beschriebenen Abbildungsfehler zu eliminieren, ist es notwendig, die bewegten Objekte zu detektieren und deren Geschwindigkeit und Position zu schätzen. Vorteilhaft ist außerdem die Schätzung der Form der Objekte.

Zur Detektion von statischen Objekten in SAR-Bildern ist aus der Literatur ein Verfahren bekannt, das die Kovarianzmatrix zwischen den Bildpunkten unterschiedlich polarisierter Bilder zur Detektion ausnutzt [2]. Bilder mit unterschiedlichen Polarisationen stehen jedoch nicht immer zur Verfügung.

Die meisten aus der Literatur bekannten Verfahren zur Bewegungsschätzung von bewegten Objekten (MTI, Moving Target Indication) arbeiten mit rangekomprimierten SAR-Daten, die entweder in den Doppler-Frequenzbereich (z. B. [3], [4]) oder in eine Zeit-Frequenz-Ebene [5] transformiert werden. Diese Verfahren sind nicht in der Lage, bewegte Objekte zu detektieren, die sich ausschließlich in Azimutrichtung bewegen, da solche Objekte zusammen mit den Hintergrunddaten (Clutterdaten) weggefiltert werden. Außerdem wird in diesen Verfahren eine Pulswiederholfrequenz (PRF, pulse repetition frequency) benötigt, die sehr viel größer als die Doppler-Bandbreite des unbewegten Hintergrunds (Clutterbandbreite) ist und daher Einschränkungen bezüglich des verwendbaren SAR-Systems mit sich bringt. Schließlich ergeben sich mit diesen Verfahren teilweise große Schätzungenauigkeiten.

In DE 44 23 899 C1 und [6] wird außerdem ein Verfahren zur Detektion, Lokalisierung und Geschwindigkeitsschätzung von Bewegtzielen aus SAR-Rohdaten vorgeschlagen, das im Frequenzbereich arbeitet. Dabei wird die Korrelation zwischen zwei zeitlich unmittelbar nacheinander gebildeten Azimutspektren ausgenutzt. Dieses Verfahren ist in der Lage, die Azimutgeschwindigkeit bewegter Objekte zu schätzen, es weist jedoch Nachteile im Hinblick auf die Darstellung der Bewegungsabläufe der bewegten Objekte auf. Insbesondere ist eine direkte Zuordnung der gewonnenen Geschwindigkeitswerte zu den bewegten Objekten im SAR-Bild nicht möglich. Außerdem werden nur Objekte detektiert, deren Azimutgeschwindigkeit größer als 22 km/h ist. Die Rangegeschwindigkeit wird nur sehr grob geschätzt.

In DE 196 18 155 C2 sowie [7] wird ein Verfahren vorgestellt, welches die zeitliche Korrelation in einer Sequenz von Single-Look SAR-Bildern (SL-Bildern) zur Detektion und Geschwindigkeitsschätzung von bewegten Objekten ausnutzt. Diese Sequenz wird zunächst aus rangekomprimierten Daten unter Verwendung des gesamten zur Verfügung stehenden Dopplerspektrums generiert. Nach der Generierung der Sequenz erfolgt eine Detektion von Kandidaten für bewegte Objekte in den single-look SAR-Bildern durch Suche nach Regionen mit gegenüber der Umgebung abweichendem Verlauf der Intensität. Die anschließende Geschwindigkeitsschätzung des detektierten Kandidaten erfolgt durch Schätzung des Verschiebungsvektors eines Kandidaten unter Ausnutzung der Korrelation zwischen aufeinanderfolgenden single-look SAR-Bildern.
Mit dem aus DE 196 18 155 C2 bekannten Verfahren ist es allerdings nicht möglich, Objekte zu detektieren, die sich ausschließlich in Rangerichtung bewegen. Ein weiterer Nachteil ist, dass der Meßbereich der Rangegeschwindigkeit durch die vom System vorgegebene PRF begrenzt ist. Darüber hinaus ist in DE 196 18 155 C2 keine Schätzung der Position des bewegten Objektes beschrieben.

Es ist somit die Aufgabe der Erfindung, ein Verfahren anzugeben, mit dem eine von der Bewegungsrichtung der Objekte unabhängige Detektion bei erweitertem Geschwindigkeitsmeßbereich sowie eine Positionsschätzung möglich ist.

Diese Aufgabe wird mit dem Verfahren nach dem Patentanspruch 1 gelöst. Vorteilhafte Ausführungen der Erfindung sind Gegenstand von weiteren Ansprüchen.

Erfindungsgemäß erfolgt die Schätzung einer oder mehrerer Geschwindigkeitskomponenten eines detektierten Kandidaten gemeinsam mit der Schätzung einer oder mehrerer Positionskomponenten des Kandidaten, wobei unter Berücksichtigung der Positionen des Kandidaten in den einzelnen Single-Look SAR-Bildern der Sequenz eine von den zu schätzenden Parametern abhängige Kostenfunktion aufgestellt wird, welche mittels einer Optimierungsmethode minimiert wird.

Für das erfindungsgemäße Verfahren werden lediglich Daten eines konventionellen SAR-Systems vorausgesetzt, d. h. eines Systems mit einer Polarisation, einer Trägerfrequenz und einem Kanal. Mit dem erfindungsgemäßen Verfahren können beliebig auf der Erdoberfläche bewegte Objekte detektiert und deren Azimut- und Rangegeschwindigkeiten sowie deren Position mit guter Genauigkeit geschätzt werden. Dieses Verfahren arbeitet mit einer PRF, die nur unwesentlich größer als die Clutterbandbreite ist.

Mit dem erfindungsgemäßen Verfahren ist eine Kompensation von Abbildungsfehlern, d. h. eine Kompensation aller drei genannten Effekte, und damit eine verzerrungsfreie Darstellung der bewegten Objekte möglich. Die Ergebnisse des erfindungsgemäßen Verfahrens können visualisiert werden durch Darstellung der SL-Bilder als Bewegtbildsequenz mit ruhendem Hintergrund und markierten, sich bewegenden Objekten.

Konkrete Ausführungsbeispiele des erfindungsgemäßen Verfahrens werden im Folgenden, teilweise unter Bezugnahme auf die Fig. 1 bis 11 erläutert. Die Figuren zeigen:

Fig. 1 Generierung einer Sequenz von Single-Look SAR-Bildern a) mit Darstellung der Range-Migration-Hyperbel eines statischen Objekts in der Range-Doppler-Ebene vor der Range-Migration-Korrektur (unten) und b) nach Range-Migration-Korrektur

Fig. 2 Messung eines Verschiebungsvektors (Displacementvektors) aus einem Bildpaar der Sequenz (Blockmatching)

Fig. 3 Zusammenhang zwischen der in den SL-Bildern zu beobachtenden Azimutgeschwindigkeit $v_{Mx,a}$ und der wirklichen Geschwindigkeit $v_{Mx}$ in Azimutrichtung ohne Berücksichtigung von Störungen

Fig. 4 Beobachtungsmodell zur unabhängigen Schätzung der Azimutgeschwindigkeit. Gemessen werden die am Ausgang anliegenden durch Rauschen gestörten Komponenten $v_{Mx,m}^{(k)}$.

Fig. 5 Beobachtungsmodell zur unabhängigen Schätzung der Rangegeschwindigkeit

Fig. 6 Dopplerspektren für jeweils ein statisches und ein bewegtes Objekt; Die Objektbewegung in Rangerichtung und die daraus resultierende Doppler- Verschiebung $f_M$ ist so groß, dass Aliasing im Dopplerspektrum entsteht (Abtastfrequenz ist die PRF $f_p$); a) Fall a=1 bzw. 0 (positive Rangegeschwindigkeit); b) Fall a=-1 bzw. 0 (negative Rangegeschwindigkeit);

Fig. 7 Vergleich der Detektions- und Meßbereiche der Objektgeschwindigkeit für verschiedene Verfahren (bezogen auf DOSAR-Parameter, ein Kanal, C-Band)

Fig. 8 Schätzergebnisse für Azimut- und Rangegeschwindigkeit; Dargestellt ist jeweils die Standardabweichung des Schätzfehlers

Fig. 9 Schätzergebnisse für Azimut- und Rangeposition; Dargestellt ist jeweils die Standardabweichung des Schätzfehlers;

Fig. 10 a) Single-Look SAR-Bild Nr. 17 aus einer generierten SAR-Bildsequenz, bestehend aus 30 Bildern; Lookmittenfrequenz 75 Hz; Die bewegten Objekte erscheinen verzerrt (vor allem unteres Objekt) und abseits von der Straße bzw. teilweise sind sie ganz verschwunden;

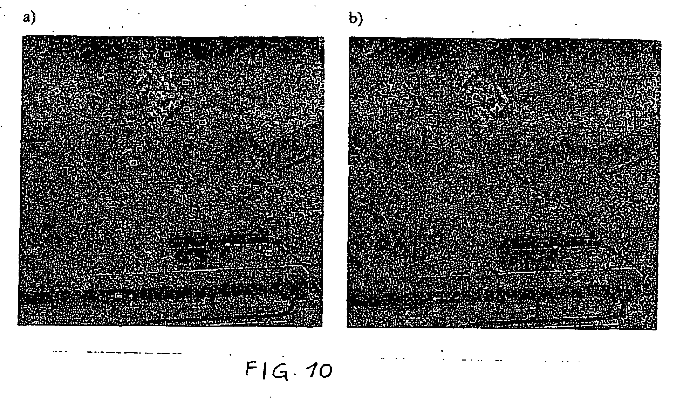

Fig. 10 b) Kompensiertes Single-Look SAR-Bild aus der kompensierten SAR-Bildsequenz. Die geschätzte Bewegungsrichtung der detektierten bewegten Objekte ist mit einem Pfeil gekennzeichnet.

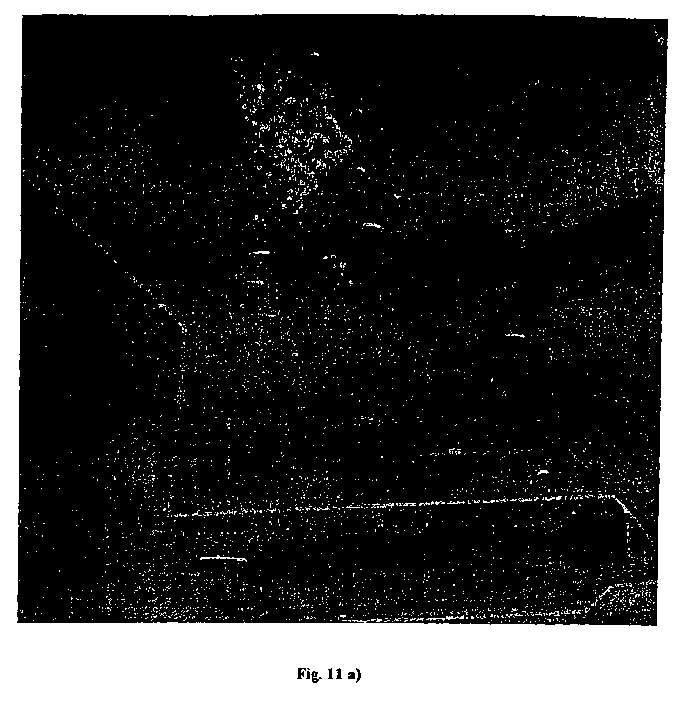

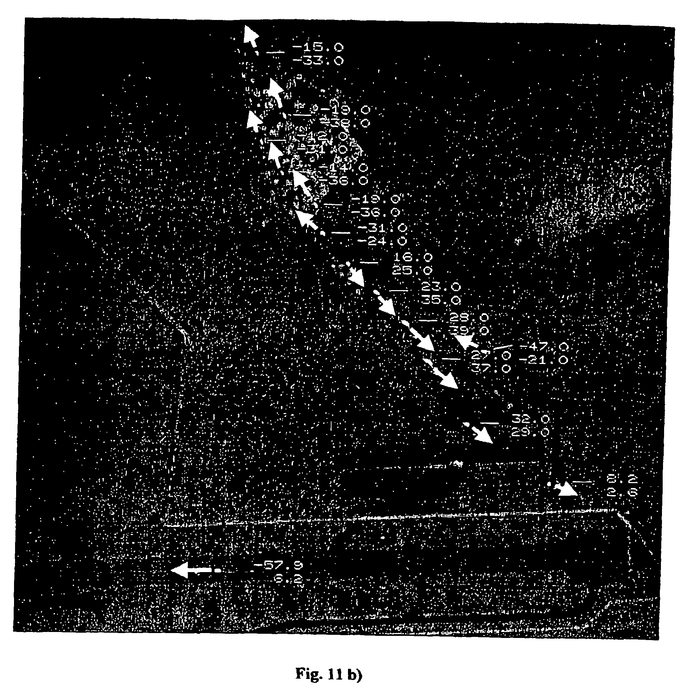

Fig. 11 a) Multi-Look-Bild eines konventionellen SAR-Prozessors. Die bewegten Objekte erscheinen verzerrt und in Azimutrichtung verschoben. Teilweise sind sie verschwunden;

Fig. 11 b)    Kompensiertes Multi-Look-Bild. Die bewegten Objekte erscheinen unverzerrt an der geschätzten Referenzposition. Es sind jeweils die Bewegungsrichtung und die geschätzten Geschwindigkeitskomponenten angegeben.

Generierung einer SAR-Bildsequenz

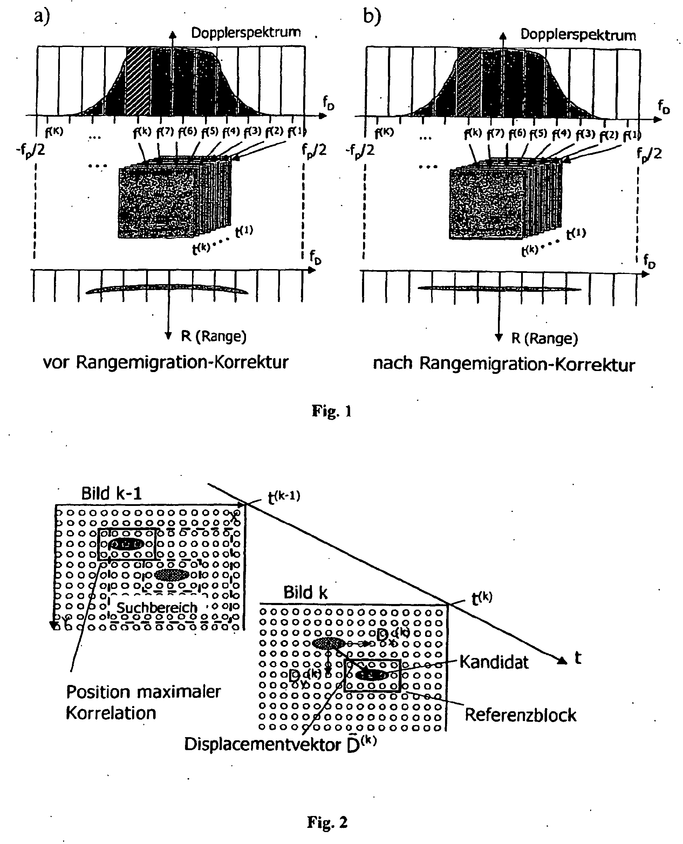

Die SAR-Bildsequenz wird aus SAR-Daten eines konventionellen (d. h. Einkanal-) SAR-Systems generiert und besteht aus zeitlich aufeinanderfolgenden Single-Look SAR-Bildern (SL-Bildern). Unter einem SL-Bild versteht man ein Bild, das unter Verwendung eines Teilbandes aus dem Dopplerspektrum, das heißt eines Looks einer bestimmten Lookbandbreite, ohne Mittelung und daher mit einer - bezogen auf die Lookbandbreite - maximalen Azimut-Auflösung prozessiert wird. Für die Generierung der Sequenz von SL-Bildern werden die rangekomprimierten SAR-Daten zunächst mit Hilfe einer Fourier-Transformation in Azimutrichtung in den Doppler-Frequenzbereich übertragen. Das komplette derart gewonnene Dopplerspektrum wird in überlappende Bänder mit jeweils gleicher Lookbandbreite unterteilt, und es wird ein SL-Bild pro Band erzeugt (siehe Fig. 1a). In Fig. 1 ist die Dopplerfrequenz-mit $f_D$ und die PRF mit $f_p$ bezeichnet. Die Bilder zeigen die Erdoberfläche dann aus verschiedenen (horizontalen) Blickwinkeln $\theta^{(k)}$, die wiederum wie folgt von den Bandmittenfrequenzen oder Lookmittenfrequenzen $f^{(k)}$ abhängen

$$\theta^{(k)} = -\arcsin\frac{f^{(k)}\lambda}{2v_{Ax}} \qquad\qquad (1)$$

Dabei bezeichnet $k$ die Nummer des SL-Bildes, $v_{Ax}$ die Antennengeschwindigkeit, die genau in Azimutrichtung $x$ gerichtet ist, und $\lambda$ die Träger-Wellenlänge. Durch die verschiedenen Blickwinkel der einzelnen Bilder bekommt man auch gleichzeitig Ansichten zu verschiedenen Zeitpunkten, und kann daher die Bilder zu einer Sequenz aneinanderreihen. Die Zeitpunkte $t^{(k)}$, bezogen auf statische Objekte (Index $T$, engl. $target$) mit einer Azimutposition in der Mitte der Szene ($x$=0), ergeben sich zu

$$t^{(k)}\left(R_{T,0}\right) = \frac{R_{T,0} \cdot \tan\theta^{(k)}}{v_{Ax}} \approx -\frac{R_{T,0}\,f^{(k)}\lambda}{2v_{Ax}^{2}} \ \text{mit}\ f^{(k)} = -\frac{2v_{Ax}\sin\theta^{(k)}}{\lambda} \qquad (2)$$

Darin ist $R_{T,0}$ die kürzeste Entfernung zwischen Antenne und statischem Objekt. Die Lookbandbreite wird auf den zu messenden Geschwindigkeitsbereich abgestimmt. Es muß darauf geachtet werden, dass sie maximal so groß ist, dass die schnellsten Objekte im Bild noch annähernd als punktförmig zu erkennen sind. Außerdem soll sie mindestens so groß sein, dass die notwendige Auflösung noch erreicht wird.

Die Bilder der Sequenz werden einer Ground-Range-Korrektur und einer Range-Migration-Korrektur unterzogen. Die Range-Migration-Korrektur wird dabei durch eine Verschiebung der Bilder in Rangerichtung $y$ entsprechend dem vom jeweiligen Blickwinkel abhängigen Abstand zwischen Antenne und den Objekten auf der Erdoberfläche ausgeführt (siehe Fig. 1 a)/b)). Die Vorteile dieser Methode gegenüber der herkömmlichen [8] bestehen in einem Rechenzeitgewinn und einer leichteren Handhabbarkeit bei der Schätzung der Rangegeschwindigkeit. Durch diese Behandlung wird erreicht, dass der ruhende Hintergrund in den einzelnen Bildern der Sequenz an den gleichen Positionen erscheint und sich lediglich die Positionen der bewegten Objekte von SL-Bild zu SL-Bild verändern.

Detektion von Kandidaten für bewegte Objekte

Nach der Generierung der Sequenz erfolgt eine Auswahl von Kandidaten für bewegte Objekte in jedem einzelnen SL-Bild der Sequenz. Als Kriterium für die Detektion als Kandidat gilt ein annähernd punktförmiges oder ellipsenförmiges Muster (letzteres träte bei vorhandener Azimutgeschwindigkeit auf). Die Suche nach Kandidaten wird bei Bildpunkten (Pixeln) mit maximaler Intensität begonnen, das heißt bei Punkten mit maximalem Rückstreukoeffizienten (RCS, radar cross section). Das Startpixel und die umliegenden Pixel werden dann als Kandidat ausgewählt, wenn die folgenden Kriterien erfüllt sind:

-    das hellste Pixel des Kandidaten hat eine höhere Intensität als eine von der globalen Intensität des Bildes abhängige Schwelle,

- die Anzahl der zu einem Kandidaten gehörenden Pixel liegt zwischen einem minimalen und einem maximalen Wert; der maximale Wert hängt dabei von der Länge der im Bild sichtbaren Objektform in Azimutrichtung ab und kann demzufolge entsprechend der maximal zu detektierenden Geschwindigkeit gewählt werden,
- die mittlere Intensität der Pixel eines Kandidaten ist merkbar höher als die mittlere Intensität der Nachbarschaft,
- die Pixel eines Kandidaten bilden ein geschlossenes Gebiet,
- kein Pixel des gerade betrachteten Kandidaten berührt ein Pixel eines bereits detektierten anderen Kandidaten.

Nach der erfolgreichen Überprüfung dieser Kriterien ist der Kandidat in dem entsprechenden SL-Bild erfolgreich detektiert. Die Pixel des Kandidaten, die die oben genannten Bedingungen erfüllen, bilden in einer vorteilhaften Ausführung der Erfindung eine sogenannte Initialform $S_{M,0}^{(k)}$ (Index $M$ für engl. *moving target*) des Kandidaten im SL-Bild $k$.

Nach der Überprüfung dieser Kriterien für ein Startpixel werden die gleichen Schritte für die übrigen Startpixel mit gleicher Intensität und nachfolgend für diejenigen mit geringerer Intensität wiederholt, bis ein Intensitätsschwellwert erreicht ist.

Nach der Auswertung des ersten SL-Bildes $k = 1$ werden auch die übrigen SL-Bilder ausgewertet, so dass man für jedes SL-Bild Kandidaten und dazugehörige Initialformen gewinnt. Im nächsten Schritt werden die in den einzelnen SL-Bildern gewonnenen Kandidaten einander zugeordnet, d. h. es wird versucht, einen Kandidaten nach der erstmaligen Detektion in Bild $k_0$ anhand der im nächsten Abschnitt geschätzten Verschiebungsvektoren über die SL-Bilder $k$ zu verfolgen (engl. *tracking*, siehe nächster Abschnitt). Bei erfolgreicher Verfolgung werden auch die einzelnen Initialformen $S_{M,0}^{(k)}$ aus den verschiedenen SL-Bildern $k$ dem jeweiligen Kandidaten zugeordnet.

Geschwindigkeits- und Positionsschätzung

Die Geschwindigkeits- und Positionsschätzung erfolgt für jeden Kandidaten in mehreren Schritten:

- Messung der Verschiebungsvektoren (Displacementvektoren von engl. *displacement,* Verschiebung) zwischen jeweils zwei aufeinanderfolgenden SL-Bildern der Sequenz
- Unabhängige Schätzung der Azimutgeschwindigkeit mit einem Beobachtungsmodell für die Azimutpositionen und einem Maximum-Likelihood-Schätzer - Unabhängige Schätzung der Rangegeschwindigkeit mit einem Beobachtungsmodell für die Rangepositionen und einem Maximum-Likelihood-Schätzer
- Gemeinsame Schätzung von Geschwindigkeit und Position durch ein erweitertes Beobachtungsmodell für Positionen unter Verwendung der ersten Schätzwerte als Startwerte, wobei in einer vorteilhaften Ausführung der Erfindung ein weiterer Parameter zur Kompensation des Aliasing im Dopplerspektrum berücksichtigt wird. In einer vorteilhaften Ausführung der Erfindung werden bei dem Beobachtungsmodell zur gemeinsamen Schätzung von Geschwindigkeit und Position zusätzlich zu den Positionen der Kandidaten in den einzelnen SL-Bildern auch die Amplituden der Kandidaten in den jeweiligen SL-Bildern berücksichtigt.

Messung der Verschiebungsvektoren

Verschiebungsvektoren werden für einen Kandidaten zwischen jeweils zwei aufeinanderfolgenden Bildern $s_k$ und $s_{k+1}$ aus der Sequenz gemessen. Dazu kann ein Blockmatching-Algorithmus benutzt werden, wie er beispielsweise aus der Bildtelefonie bekannt ist [9]. In diesem Algorithmus wird an der Stelle des Kandidaten in Bild $s_{k+1}$ ein Fenster plaziert, so dass der Kandidat im Mittelpunkt liegt (siehe Fig. 2). Nun wird im Bild $s_k$ ausgehend von der gleichen Position ein zweites Fenster innerhalb eines bestimmten Suchbereichs solange verschoben, bis die Position erreicht ist, an dem die Amplitudenwerte der Pixel in den beiden Fenstern die größte Korrelation aufweisen. Es wird angenommen, dass die Positionsdifferenz zwischen beiden Fenstern dem Verschiebungsvektor des Kandidaten zwischen den beiden Bildern entspricht. Dieser Verschiebungsvektor wird dem Bild $s_{k+1}$ zugeordnet, so dass für das erste Bild der Sequenz kein Verschiebungsvektor existiert. Zur Messung der Korrelation können verschiedene Matching-Kriterien benutzt werden, wie z. B. der Kreuzkorrelationskoeffizient, die normierte Kreuzkorrelationsfunktion (NCCF, normalised cross correlation function), der mittlere quadratische Fehler (MSE, mean square error) oder die mittlere absolute Differenz (MAD). Das NCCF-Kriterium bringt die besten Ergebnisse, aber im Hinblick auf eine kürzere Rechenzeit kann auch das MSE-Kriterium verwendet werden, das fast genauso gute Ergebnisse liefert. Das NCCF-Kriterium ist definiert zu

$$C_{Ns_{k+1}s_k}(D_x, D_y) = \frac{\sum\limits_{x,y}\left[s_{k+1}(x,y) \cdot s_k(x-D_x, y-D_y)\right]}{\sqrt{\sum\limits_{x,y} s_{k+1}^2(x,y) \cdot \sum\limits_{x,y} s_k^2(x-D_x, y-D_y)}} \qquad (3)$$

wobei $(x, y)$ eine der Positionen innerhalb des Fensters in Bild $s_{k+1}$ ist, und $D_x$ und $D_y$ die Positionsdifferenzen zwischen den beiden Fenstern bezeichnen. Der Verschiebungsvektor aus dem ersten Bildpaar $k_0, k_0+1$ wird genutzt, um den Kandidaten im Bild $k_0+2$ zu verfolgen, da erwartet wird, dass sich die Bewegungsrichtung des Kandidaten von Bild zu Bild nur unwesentlich verändert. So ist es möglich, den Kandidaten auch über die weiteren Bilder der Sequenz bis zum Bild $k_0+K_M-1$ zu verfolgen, d. h. dem letzten Bild, in dem der Kandidat aufgrund seiner Amplitudenwerte detektiert wurde. $K_M$ ist damit die Gesamtanzahl der Bilder, in denen der Kandidat detektiert wurde.

Schätzung der Azimutgeschwindigkeit

Aus dem Verschiebungsvektor in der Einheit [Pixel/Bild] $\vec{D}^{(k)} = (D_x, D_y)^{(k)}$ kann die beobachtete Geschwindigkeit in [m/s] unter Berücksichtigung des Bildpunktabstands $\delta x$ (engl. pixel spacing), der in Azimut- und Rangerichtung als gleich angenommen wird, und der Zeitdifferenz $\Delta t$ zwischen zwei aufeinanderfolgenden Bildern wie folgt berechnet werden

$$\vec{v}_{M,m} = \frac{\vec{D}^{(k)} \delta x}{\Delta t} \qquad (4)$$

Die Zeitdifferenz $\Delta t$ ergibt sich unter Verwendung von (2) und der minimalen Entfernung $R_{M,0}$ zwischen Antenne und betrachtetem bewegten Kandidaten zu

$$\Delta t \approx \frac{\Delta\theta \; R_{M,0}}{v_{Ax}} \approx -\frac{\Delta f_k \; \lambda \; R_{M,0}}{2v_{Ax}^2} \text{ für } \sin\theta \; \approx \; \theta \; \approx \tan\theta \qquad (5)$$

wobei $\Delta\theta$ die Winkeldifferenz und $\Delta f_k$ die Differenz der Lookmittenfrequenzen zwischen zwei aufeinanderfolgenden Bildern ist. Die Zeit $t$ ist also nicht überall im Bild gleich, sondern ist von der Range-Entfernung abhängig.

Die beobachtete Geschwindigkeit $\vec{v}_{M,m}$ stimmt aus verschiedenen Gründen nicht mit der wirklichen Geschwindigkeit überein:

- in Azimutrichtung durch Stauchung oder Streckung des Spektrums, kombiniert mit Beobachtungszeiten der bewegten Objekte in den SL-Bildern, die von denen der statischen Objekte abweichen
- in Rangerichtung durch die Range-Migration-Korrektur

Darüber hinaus gibt es einen zeitlichen Versatz derjenigen bewegten Objekte, die sich in Rangerichtung bewegen. Dieser zeitlicheversatz ist auf die zusätzliche Dopplerverschiebung

$$f_M = -\frac{2v_{My} \sin\eta}{\lambda} \qquad (6)$$

zurückzuführen, mit $\eta$ als Blickwinkel (entspricht 90˚ - Einfallswinkel), und ergibt sich zu (vgl. (2))

$$\Delta t_M = -\frac{f_M \lambda R_{M,0}}{2v_{Ax}^2} = \frac{v_{My} \sin\eta \cdot R_{M,0}}{v_{Ax}^2} \qquad (7)$$

Aus diesem zeitlichen Versatz resultiert eine Abbildung solcher Objekte in anderen als den erwarteten SL-Bildern.

Im Folgenden werden die beiden zu beobachtenden Geschwindigkeitskomponenten und damit die Abweichung der beobachteten Größen von den wahren Größen zunächst separat analysiert.

In Azimutrichtung sind die Verfälschungen der Geschwindigkeit dadurch zu erklären, dass die Azimutpositionen der bewegten Objekte nicht mit den wirklichen Positionen übereinstimmen. Ouchi [10] hat gezeigt, dass die bewegten Objekte in den SL-Bildern an solchen Azimutpositionen erscheinen, als ob sie eine gegenüber der Wirklichkeit doppelt so große Geschwindigkeit hätten. Ouchi hat dabei jedoch unter anderem die Näherung $v_{Mx}/v_{Ax} \ll 1$ verwendet, die im Fall von langsamen Trägerplattformen und schnellen Objekten nicht erfüllt ist. Hier wird daher ein genauerer Faktor $m_{vMx}$ als Quotient aus analytisch hergeleiteter zu beobachtender Geschwindigkeitskomponente $v_{Mx,a}$ und wirklicher Geschwindigkeitskomponente $v_{Mx}$ abgeleitet, der ohne diese Näherung auskommt und von den zu beobachtenden Azimutpositionen $p_{Mx}$ des bewegten Objekts ausgeht:

$$m_{v_{Mx}} = \frac{v_{Mx,a}}{v_{Mx}} = \frac{p_{Mx}}{v_{Mx}t} \qquad (8)$$

Da das Verhalten der bewegten Objekte nahezu unabhängig von der Azimutposition ist, kann man ohne Beschränkung der Allgemeinheit die Azimutposition zum Zeitpunkt $t = 0$ auf $p_{Mx,0} = p_{Mx}(t=0) = 0$ setzen. In (5) kann dann $\Delta t = t$ und $\Delta f_k = f_D$, also der resultierenden Dopplerverschiebung, gesetzt werden. Bezeichnet man die Azimutposition der Antenne mit $p_{Ax}$, gilt unter Verwendung von (1) und (2)

$$m_{v_{Mx}} \approx -\frac{1}{v_{Mx}} \cdot \frac{p_{Ax} + R_{M,0}\tan\left(\arcsin\frac{f_D \lambda}{2v_{Ax}}\right)}{\dfrac{f_D \lambda R_{M,0}}{2v_{Ax}^2}} \qquad (9)$$

Macht man wieder die Näherung $\sin\theta \approx \theta \approx \tan\theta$, so kann man dies mit

$$f_D = -\frac{2(v_{Ax} - v_{Mx})}{\lambda} \cdot \sin\theta \qquad (10)$$

und $p_{Ax} = v_{Ax}t$ umformen zu

$$m_{v_{Mx}} = \frac{v_{Mx,a}}{v_{Mx}} \approx -\frac{v_{Ax}}{v_{Mx}} \cdot \left(1 - \frac{v_{Ax}^2}{(v_{Ax} - v_{Mx})^2}\right) \qquad (11)$$

Daraus ergibt sich für die zugrundeliegende wirkliche Geschwindigkeit zu

$$v_{Mx} = f^{-1}(v_{Mx,a}) = v_{Ax} - \sqrt{\frac{v_{Ax}^3}{v_{Mx,a} + v_{Ax}}} \quad \text{für } v_{Mx,a} > -v_{Ax} \tag{12}$$

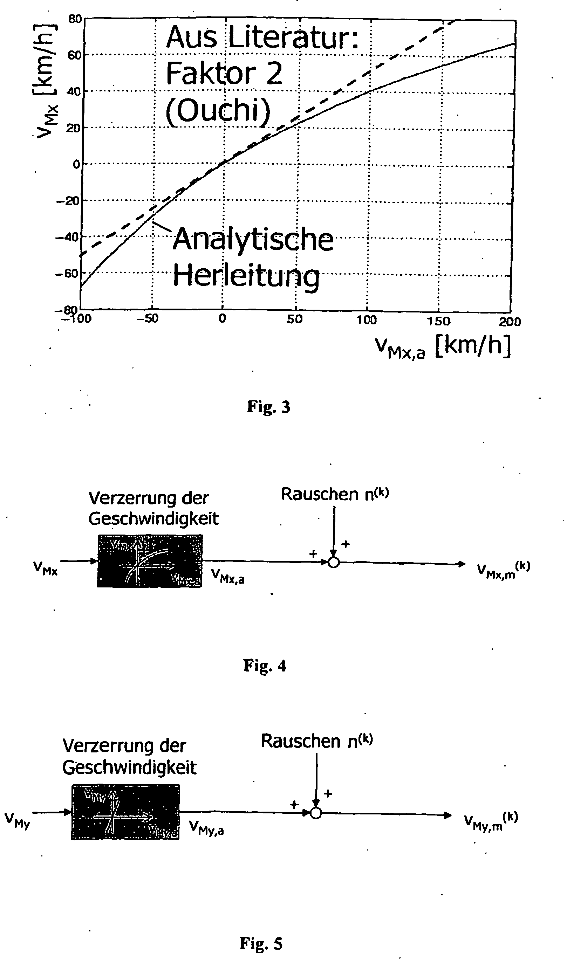

Dieser Zusammenhang ist in Fig. 3 für $v_{Ax}$ = 82.5 m/s = 297 km/h grafisch dargestellt. Man erkennt, dass diese Relation für kleine Geschwindigkeiten $v_{Mx}$ mit dem von Ouchi gefundenen Faktor 2 übereinstimmt. Nimmt man an, dass die Verschiebungsvektoren die wirklichen Verschiebungen des Kandidaten von Bild $k$-1 zu Bild k wiedergeben, d. h. ungestört sind, so stellt die Inverse der Gl: (12) einen Zusammenhang zwischen der wahren Geschwindigkeit $v_{Mx}$ und der mittels der Verschiebungsvektoren gemessenen Geschwindigkeit her. Mit Gl. (4) ergibt sich daher aus (12) ein erster Schätzwert für die Geschwindigkeit $v_{Mx}$ im Bild k als Funktion der Verschiebungsvektorkomponente $D_x^{(k)}$ zu

$$\hat{v}_{Mx,1}^{(k)} = v_{Ax} \cdot \left[ 1 - \frac{1}{\sqrt{1 - \frac{2D_x^{(k)} \delta x \, v_{Ax}}{\Delta f_k \, \lambda \, R_{M,0}}}} \right] \quad \text{für } v_{Mx,a} > -v_{Ax} \tag{13}$$

Üblicherweise sind die beobachteten Größen, d. h. in diesem Fall die Verschiebungsvektoren, jedoch nicht ungestört. In einem Beobachtungsmodell kann angenommen werden, dass alle Störungen zusammengenommen durch ein additives normalverteiltes Rauschen $n^{(k)}$ repräsentiert werden (siehe Fig. 4). Ausgehend von diesem Beobachtungsmodell eignet sich das sogenannte Maximum-Likelihood-Schätzverfahren, um einen optimalen Schätzwert zu erhalten. Bei diesem Schätzverfahren ist kein A-priori-Wissen über die Wahrscheinlichkeitsdichte der zu schätzenden Größe notwendig [11]. Mit der Maximum-Likelihood-Schätzregel gewinnt man denjenigen Wert $v_{Mx}$ als Schätzwert $v_{Mx,ML}$, aus denen die Meßwerte $v_{Mx,m}^{(k)}$ am wahrscheinlichsten hervorgegangen sind:

$$\hat{v}_{Mx,ML} = \arg\max_{v_{Mx}} \left( p_{v_{Mx,m}|v_{Mx}}(v_{Mx,m}^{(k_0)}, ..., v_{Mx,m}^{(k_0+k_M-1)} \mid v_{Mx}) \right) \tag{14}$$

Bei angenommener statistischer Unabhängig der Störungen in benachbarten Bildern ergibt sich die bedingte Verbundwahrscheinlichkeitsdichte in Gl. (14) als Produkt von Normalverteilungen. Nach dem Einsetzen dieser Verbundwahrscheinlichkeitsdichte muß Gl. (14) zur Bestimmung des Schätzwertes abgeleitet und zu Null gesetzt werden. Einfacher läßt sich der Maximum-Likelihood-Schätzwert durch die Ableitung des negativen Logarithmus der Verbundwahrscheinlichkeitsdichte, der sogenannten ML-Kostenfunktion, bestimmen. Mit dem Zusammenhang nach Gl. (12) ergibt sich daraus ein Schätzwert für die Azimutgeschwindigkeit zu

$$\hat{v}_{Mx,ML} = f^{-1}\left[ \frac{1}{K_M} \sum_{k=k_0}^{k_0+K_M-1} v_{Mx,m}^{(k)} \right] . \tag{15}$$

Nach Einsetzen von Gl. (4) und (2) ergibt sich schließlich der Maximum-Likelihood-Schätzwert (ML) als Funktion der Verschiebungsvektorkomponenten $D_x^{(k)}$ zu

$$\hat{v}_{Mx,ML} = f^{-1}\left[\frac{1}{K_M}\sum_{k=k_0}^{k_0+K_M-1}\frac{2D_x^{(k)}\,\delta x\,v_{Ax}^2}{\Delta f_k\,\lambda\,R_{M,0}}\right].$$ (16)

Schätzung der Rangegeschwindigkeit

Wie bereits erwähnt, ist die aus den Verschiebungsvektoren gewonnene Geschwindigkeitskomponente in Rangerichtung $v_{My,m}$ ebenfalls verfälscht, jedoch in anderer Weise als die Azimutkomponente. Bei der Rangegeschwindigkeit rührt die Verfälschung daher, dass die Rangepositionen derjenigen Objekte, deren Rangegeschwindigkeit ungleich Null ist, durch die Range-Migration-Korrektur verschoben sind. Dennoch kann mit Hilfe der Verschiebungsvektoren ein erster Schätzwert für die Rangegeschwindigkeit gewonnen werden. Dabei müssen die Rangekomponenten der Verschiebungsvektoren um die durch die Range-Migration-Korrektur hervorgerufenen Positionsdifferenzen $\Delta y_T^{(k)}$ zwischen jeweils zwei aufeinanderfolgenden SL-Bildern korrigiert werden. Einen Maximum-Likelihood-Schätzwert für die Rangegeschwindigkeit erhält man damit analog zur Azimutgeschwindigkeit mit dem Beobachtungsmodell gemäß Fig. 5 zu

$$\hat{v}_{My,ML} = \frac{2v_{Ax}^2\cdot\delta y}{\Delta f_k\,\lambda\,R_{M,0}\,K_M}\left[\left(-\sum_{k=k_0}^{k_0+K_M-1}D_y^{(k)}\right)+\Delta y_T^{(k_0-1)}(R_{M,0})-\Delta y_T^{(k_0+K_M-1)}(R_{M,0})\right],$$ (17)

wobei der Pixelabstand in Rangerichtung mit $\delta y$ bezeichnet ist. Die darin enthaltenen Terme aus der Range-Migration-Korrektur ergeben sich zu

$$\Delta y_T^{(k)}(R_{M,0}) = \left(\sqrt{\left(t^{(k)}(R_{M,0})\cdot v_{Ax}\right)^2 + R_{M,0}^2} - R_{M,0}\right)\cdot\frac{\sin\eta}{\delta y}$$ (18)

Darin ist $t^{(k)}(R)$ die Zeit aus Gl. (2) und $\eta$ der Blickwinkel (entspricht 90° - Einfallswinkel).
Der Schätzwert nach Gl. (17) ist relativ ungenau, da die Positionsverschiebungen aus der Range-Migration-Korrektur fast so groß sind wie diejenigen aus der Objektbewegung selbst. Eine genauere Schätzung dieser Komponente wird daher gemeinsam mit der Azimutkomponente und der Position in einem zweiten Schritt vorgenommen. In einer vorteilhaften Ausführung der Erfindung ist es möglich, unter Einbeziehung der Amplitudenwerte in den einzelnen SL-Bildern die Genauigkeit noch weiter zu steigern.

Gemeinsame Geschwindigkeits- und Positionsschätzung

Die gemeinsame Geschwindigkeits- und Positionsschätzung ist eine wesentliche Neuerung gegenüber DE 196 18 155 C2. Sie ermöglicht die von der Bewegungsrichtung der Objekte nahezu unabhängige Detektion und die Vergrößerung der Meßbereiche für die beiden Geschwindigkeitskomponenten. Darüber hinaus wird hiermit eine - für Einkanal-SAR-Systeme - sehr genaue Positionsschätzung realisiert, die in DE 196 18 155 C2 ebenfalls noch nicht enthalten ist.
Wie im ersten Abschnitt beschrieben, ist die wesentliche Auswirkung der Objektgeschwindigkeit in Rangerichtung ein Versatz in Azimutrichtung. Es ist damit eine Doppeldeutigkeit eines aufgrund der Rangegeschwindigkeit versetzt abgebildeten bewegten Objekts mit einem statischen Objekt an einer um diesen Versatz abweichenden Azimutposition gegeben. Hier wird daher ein Verfahren erläutert, wie diese Doppeldeutigkeit durch Auswertung der Positionen in den einzelnen Bildern der Sequenz behoben werden kann bzw. die Schätzung für Geschwindigkeit und Position bei Auswertung dieser Informationen verbessert werden kann. Vorteilhaft kann zusätzlich zu der Auswertung der Positionen auch die zeitabhängige Signalamplitude berücksichtigt werden. Dazu werden erfindungsgemäß die Rangegeschwindigkeit und die Azimutposition gemeinsam geschätzt. Neben der Abhängigkeit der gemessenen Azimutposition von der Rangegeschwindigkeit gibt es außerdem eine geringfügige Abhängigkeit der gemessenen Verschiebungsvektoren $D^{(k)}$ von der Position, so dass in diesem Abschnitt beispielhaft vier Parameter $p_{Mx,0}$, $p_{My,0}$, $v_{Mx}$ und $v_{My}$ sowie ein zusätzlich eingeführter Parameter a zur Aliasingkompensation mittels eines gemeinsamen Beobachtungsmodells und eines Optimierungsverfahrens gemeinsam geschätzt werden sollen. Eingangswerte für das Optimierungsverfahren sind die Maximum-Likelihood-Schätzwerte aus dem vorangehenden Abschnitt für die Geschwindigkeit (Gl. (16) und (17)) sowie die gemittelten Einzelpositionen $\bar{p}_M^{(k)}$ aus den SL-Bildern als Startwerte für die Position. Die Azimutkomponente der Startposition wird dabei um den von der Rangegeschwindigkeit verursachten Versatz

$$\Delta x_M = -\frac{v_{My}\sin\eta}{v_{Ax}} \cdot R_{M,0} \qquad (19)$$

korrigiert, wobei für $v_{My}$ an dieser Stelle der Schätzwert $\hat{v}_{My,ML}$ aus Gl. (17) verwendet wird.

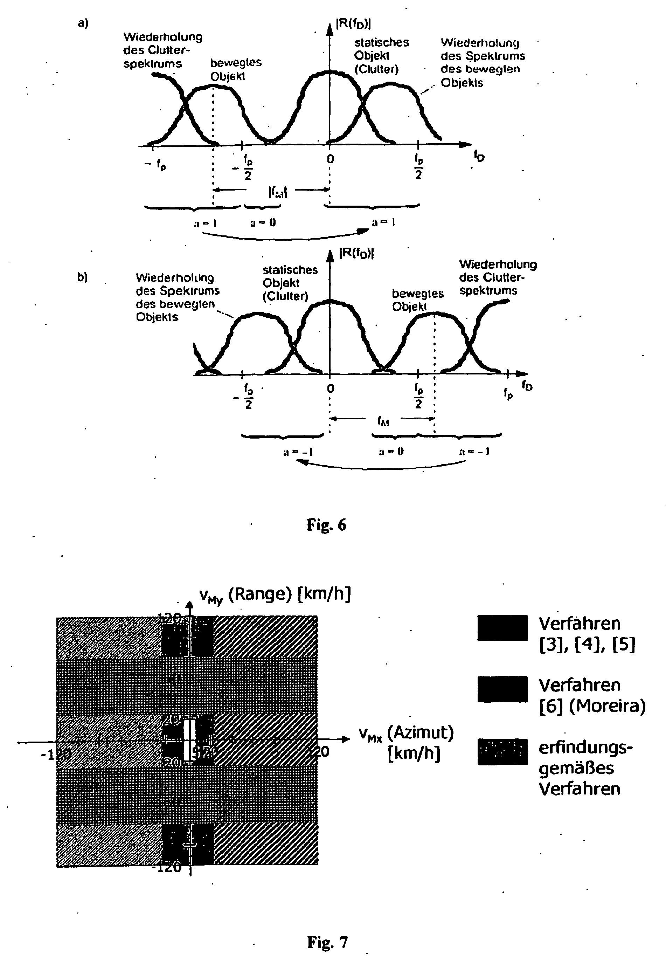

Um die gemeinsame Geschwindigkeits- und Positionsschätzung durchführen zu können, werden analytische Beziehungen für Azimut- und Rangekomponente der zeitabhängigen, fehlerbehafteten Position eines beliebig bewegten Objekts hergeleitet. Vorteilhaft wird diese analytische Beziehung durch die zeitabhängige Amplitude des Objekts erweitert. In diese dritte Beziehung geht die Rangegeschwindigkeit und die Abschwächung des Signals durch das Antennendiagramm ein. Außerdem wird in den analytischen Beziehungen die Auswirkung von Aliasing im Dopplerspektrum berücksichtigt. Dieses Aliasing wird durch eine große Rangegeschwindigkeit verursacht, die die Spektralanteile eines derart bewegten Objekts entsprechend der Dopplerverschiebung nach Gl. (5) über die halbe Abtastfrequenz $f_p$ hinaus verschiebt (siehe Fig. 6). Dadurch werden solche Objekte in anderen Bildern der Sequenz abgebildet (z. B. am Ende der Sequenz statt am Anfang) und auch die Änderung der Amplitude ist zusätzlich zeitlich verschoben. Mittels der hergeleiteten analytischen Beziehungen für die zeitabhängigen Positionen wird eine Kostenfunktion aufgestellt, in die die quadratischen Fehler zwischen den gemessenen und den analytisch hergeleiteten Positionen eingehen. Vorteilhaft wird die Kostenfunktion durch die hergeleitete analytische Beziehung für die zeitabhängige Amplitude erweitert, indem als zusätzlicher Kostenterm die quadratischen Fehler zwischen gemessenen und analytisch berechneten Amplituden berücksichtigt werden. Selbstverständlich können auch Fehler höherer Ordnung und/oder absolute Fehler in der Kostenfunktion berücksichtigt werden. Ziel des anschließenden Optimierungsverfahrens ist es, die Kosten durch Variation der fünf Parameter zu minimieren, da in einer Kostenfunktion niedrige Kosten mit einer hohen Wahrscheinlichkeit der Parameterkombination korrespondieren.

Die zeitabhängige, fehlerbehaftete Azimutposition eines in Range- und Azimutrichtung bewegten Objekts an der Referenzposition $p_{Mx,0} = p_{Mx}(t=0) = 0$ ergibt sich analytisch mit Gl. (1) zu

$$X'^{(k)}_{M,a} = p_{Ax}(t_M^{(k)}) - R'_M \sin\theta(t_M^{(k)})$$

$$X'^{(k)}_{M,a} = v_{Ax} t_M^{(k)} + R'_M (t_M^{(k)}) \frac{f_k \lambda}{2 v_{Ax}} \qquad . \qquad (20)$$

wobei $f_k$ der Dopplerfrequenz des bewegten Objekts entsprechen muß. $R'_M$ ist die durch die Azimutverschiebung verfälschte, zeitveränderliche Rangeentfernung. Mit $t_M^{(k)}$ ist jeweils der Zeitpunkt bezeichnet, zu dem das bewegte Objekt im SL-Bild $k$ abgebildet wird. Infolge der Rangegeschwindigkeit $v_{My}$ können Dopplerfrequenzen auftreten, die im Basisband des Dopplerspektrums ($a = 0$) oder bei Auftreten von Aliasing außerhalb ($a = -1$ oder $a = 1$) liegen (siehe Fig. 6). Da der Parameter $a$ für das gleiche Objekt über den Verlauf der Sequenz von SL-Bildern zwei unterschiedliche Werte annehmen kann, wird er mit dem hochgestellten Index (k) versehen. Allerdings bleibt in aufeinanderfolgenden Bildern der Sequenz, in denen ein Kandidat detektiert wurde, der Parameter $a^{(k)}$ konstant. Damit wird Gl. (20) zu

$$X'^{(k)}_{M,a} = v_{Ax} t^{(k)}_M + R'_M (t^{(k)}_M) \frac{(f_D + a^{(k)} \cdot f_p) \cdot \lambda}{2 v_{Ax}} \qquad (21)$$

Nach Einsetzen der Beziehung

$$f_D(t) = -\frac{2(v_{Ax} - v_{Mx})}{\lambda} \cdot \sin\theta - \frac{2 v_{My}}{\lambda} \cdot \sin\eta \cos\theta \qquad (22)$$

ergibt sich schließlich mit Gl. (11)

$$X'^{(k)}_{M,a} \approx \left( v_{Ax} - \frac{(v_{Ax} - v_{Mx})^2}{v_{Ax}} \right) t^{(k)}_M + \frac{(v_{Ax} - v_{Mx})}{v_{Ax}} \cdot p_{Mx,0} + \\ + R'_M (t^{(k)}_M) \left( \frac{a^{(k)} \cdot f_p \cdot \lambda}{2 v_{Ax}} - \frac{v_{My}}{v_{Ax}} \cdot \sin\eta \cos\theta_k \right) \qquad (23)$$

Man erkennt hier eine Abhängigkeit von $p_{Mx,0}$, $v_{Mx}$, $v_{My}$ und $a^{(k)}$.

Die Ground-Range-Positionen $Y'^{(k)}_M$ ergeben sich analytisch mit Gl. (18) zu

$$Y'^{(k)}_{M,a} = \sqrt{\left[ (v_{Ax} - v_{Mx}) t^{(k)}_M - p_{Mx,0} \right]^2 + \left[ v_{My} t^{(k)}_M + p_{My,0} \right]^2} + \Delta y^{(k)}_T \,, \qquad (24)$$

d. h. sie sind von $p_{Mx,0}$, $p_{My,0}$, $v_{Mx}$ und $v_{My}$ abhängig. Schließlich kann vorteilhaft ein analytischer Wert für die Signalamplitude im Bild $k$ unter Vernachlässigung von Störungen wie z. B. richtungsabhängiger Reflexionen zu

$$\left| u_a^{(k)} \right| = \left| u_{max} \right| \cdot si^2 (\pi \frac{l}{\lambda} \cdot \sin\theta_k) \qquad (25)$$

angegeben werden, wobei $u_{max}$ der maximal auftretende Amplitudenwert des jeweiligen Objekts ist und Sättigungseffekte unberücksichtigt bleiben. Im Fall des Auftretens von Aliasing verfälscht sich auch der zeitliche Versatz nach Gl. (7) zu

$$\Delta t_M^{(k)} = -\frac{(f_D + a^{(k)} \cdot f_p) \lambda R_{M,0}}{2 v_{Ax}^2} \,, \qquad (26)$$

so dass dann auch die Amplituden in den SL-Bildern nach Gl. (25) entsprechend zeitlich verschoben erscheinen.
Für die gemeinsame Schätzung wird der quadratische Fehler zwischen den gemessenen und den analytisch hergeleiteten Positionen nach Gl. (23) und (24) berechnet und in die bereits erwähnte Kostenfunktion eingefügt, die sich zu

$$\varsigma = \frac{1}{K_M} \sum_{k_0}^{k_0+K_M-1} \left(X_M^{\prime(k)} - \hat{X}_M^{\prime(k)}\right)^2 + \left(Y_M^{\prime(k)} - \hat{Y}_M^{\prime(k)}\right)^2 \qquad (27)$$

ergibt.

In einer vorteilhaften Ausführung der Erfindung werden in der Kostenfunktion nach Gl. (27) zusätzlich die gemessenen und die nach Gl. (25) analytisch hergeleiteten Amplituden berücksichtigt. Die erweiterte Kostenfunktion ergibt sich somit zu

$$\varsigma = \frac{1}{K_M} \sum_{k_0}^{k_0+K_M-1} \left(X_M^{\prime(k)} - \hat{X}_M^{\prime(k)}\right)^2 + \left(Y_M^{\prime(k)} - \hat{Y}_M^{\prime(k)}\right)^2 + \lambda_A \cdot \left(\frac{u^{(k)}}{\bar{u}} - \frac{\hat{u}^{(k)}}{\bar{\hat{u}}}\right)^2 \qquad (28)$$

Da in Gl. (27) und Gl. (28) in die analytisch berechneten Werte gemäß Gl. (23) bis (25) jeweils die im zu schätzenden Werte für die Parameter eingesetzt werden, beginnend mit den Werten aus den vorangehenden Abschnitten, wurde der Index a jeweils durch das ^ ersetzt. Die Messungen der Amplituden $u^{(k)}$ und der Positionen $(X'_M, Y'_M)^{(k)}$ werden in den SL-Bildern vorgenommen. Dazu wird jeweils der Schwerpunkt eines beobachteten Objekts verwendet. Um eine Unabhängigkeit vom Rückstreukoeffizienten, d. h. von $u_{max}$ zu erreichen, wird in dem Amplitudenterm jeweils durch die mittlere Amplitude $u$ bzw. $\hat{u}$ geteilt. Die Mittelung erfolgt dabei über alle Werte $u^{(k)}$ bzw. $\hat{u}^{(k)}$, in denen der Kandidat detektiert wurde. Außerdem wird der quadratische Fehler der Amplitude mit einem Parameter $\lambda_A$ gewichtet, um die Relation der quadratischen Fehler herzustellen.

In einer beispielhaften Ausführung des erfindungsgemäßen Verfahrens wird die aufgestellte Kostenfunktion zur Gewinnung der verbesserten Schätzwerte für die fünf Parameter $\hat{p}_{Mx,0}$, $\hat{p}_{My,0}$, $\hat{v}_{Mx}$, $\hat{v}_{My}$ und a beispielsweise mit Hilfe der Downhill-Simplex-Optimierungsmethode minimiert [12]. Startwerte für die Optimierung sind wie erwähnt die bisher gewonnenen Schätzwerte aus den vorangehenden Abschnitten. Die Downhill-Simplex-Optimierungsmethode verändert jeweils einen der Parameter solange, wie sich die Kosten nach der vorgegebenen Kostenfunktion verringern oder in maximal $N_{Opt,worse}$ Iterationen verschlechtern. Dann wird der nächste Parameter geändert usw. Während der Suche wird die Schrittweite verkleinert. Abgebrochen wird nach einer festgelegten Anzahl von Iterationen oder wenn keine Parameteränderung nach mehr als $N_{Opt,worse}$ Schritten eine Verminderung der Kosten ergibt. Die Downhill-Simplex-Optimierungsmethode ist konvergent und kann lokale Minima überwinden.

In einer vorteilhaften Ausführung der Erfindung wird aus den Azimutkomponenten der Verschiebungsvektoren $\hat{D}_x^{(k)}$ des Kandidaten ein Schätzwert $\hat{v}_{Mx}$ für die Azimutkomponente des Geschwindigkeitsvektors des Kandidaten ermittelt. Dieser Schätzwert wird dann bei der Optimierungsmethode zur Schätzung der übrigen Parameter konstant gehalten.

In einer weiteren vorteilhaften Ausführung der Erfindung wird aus den einzelnen Rangepositionen $Y_M^{\prime(k)}$ des Kandidaten in den einzelnen single-look SAR-Bildern ein Schätzwert für die Rangekomponente $\hat{p}_{My,0}$ des Positionsvektors des Kandidaten ermittelt, der bei der Optimierungsmethode zur Schätzung der übrigen zu schätzenden Parameter konstant gehalten wird.

Verifikation der Kandidaten als bewegte Objekte

Wie bereits im Abschnitt ‚Geschwindigkeits- und Positionsschätzung' erläutert, werden die Kandidaten von Bild zu Bild entsprechend den bei vorhergehenden Bildpaaren geschätzten Verschiebungsvektoren verfolgt (tracking). Die ausgewählten Kandidaten werden als bewegte Objekte verifiziert, wenn

- die Verfolgung eines Kandidaten von SL-Bild $k_0$ zu SL-Bild $k_0+1$ und weiter bis SL-Bild $k_0+K_M-1$ mit Hilfe der Verschiebungsvektoren über beispielsweise mindestens $K_{M,min}$ = 4 SL-Bilder der Sequenz möglich ist. Dabei ist eine Unterbrechung der Verfolgung in ein oder zwei aufeinanderfolgenden SL-Bildern zulässig. Außerdem muß erfüllt sein, dass
- einer der beiden Beträge der Geschwindigkeitskomponenten folgende Mindestwerte erreicht:
Azimutkomponente $|\hat{v}_{Mx}|$: 5 km/h oder Rangekomponente $|\hat{v}_{My}|$: 20 km/h

Kompensation der Abbildungsfehler

Die Kompensation der Abbildungsfehler mit dem Ziel der korrekten Darstellung der bewegten Objekte kann auf zwei Arten erfolgen, indem eine kompensierte SAR-Bildsequenz oder ein kompensiertes Multi-Look-Bild generiert wird. Der Hintergrund bleibt in beiden Fällen erhalten.

Im ersten Fall der kompensierten SAR-Bildsequenz werden folgende Schritte in den einzelnen SL-Bildern durchgeführt:

- Extraktion der bewegten Objekte mit den Initialformen $S_{M,0}^{(k)}$ aus den ursprünglichen SL-Bildern

- Berechnung der Positionen $(X_M, Y_M)^{(k)}$ in den einzelnen SL-Bildern anhand der gewonnenen Schätzwerte für Position und Geschwindigkeit und den Zeiten der Bilder gemäß Gl. (2)

- Einsetzen der bewegten Objekte an den berechneten Positionen $(X_M, Y_M)^{(k)}$ mit der Form $S_M$. Der Zeitversatz nach Gl. (26) wird dadurch kompensiert, dass die Objekte in entsprechend anderen Bildern extrahiert werden als sie wieder eingesetzt werden.

Ein beispielhaftes Ergebnis ist in Fig. 10 b) zu sehen. Im Vergleich zum ursprünglichen Bild in Fig. 10 a) sind alle Abbildungsfehler weitgehend kompensiert.

Im zweiten Fall des kompensierten Multi-Look-Bildes werden folgende Schritte in den einzelnen SL-Bildern durchgeführt:

- Extraktion der bewegten Objekte mit den Initialformen $S_{M,0}^{(k)}$ aus den ursprünglichen SL-Bildern

- Einsetzen der bewegten Objekte an der geschätzten Referenzposition $\hat{p}_{M,0}$ mit der Form $S_M$. Auch hier wird der Zeitversatz nach Gl. (26) durch Extrahieren und Einsetzen in u. U. unterschiedlichen Bildern kompensiert.

- Multi-Look-Mittelung, d. h. Mittelung der Amplitudenwerte aus verschiedenen SL-Bildern

Ein beispielhaftes Ergebnis ist in Fig. 11 b) zu sehen. Im Vergleich dazu zeigt Fig. 11 a) ein Multi-Look-Bild eines konventionellen SAR-Prozessors. Man erkennt deutlich die Abbildungsfehler der bewegten Objekte, die in Fig. 11 b) weitgehend kompensiert sind.

Ergebnisse

Das erfindungsgemäße Verfahren wurde auf simulierte und echte SAR-Rohdaten angewendet. Bei den simulierten Daten handelte es sich um simulierte SAR-Rohdaten von bewegten Objekten, die mit echten Hintergrund-Daten (Clutter-Daten) überlagert wurden. Sowohl die echten SAR-Rohdaten von bewegten Fahrzeugen als auch die zur Überlagerung verwendeten Hintergrund-Daten stammen vom DOSAR-System der Fa. Dornier GmbH im C-Band (5,3 GHz) oder X-Band (9,6 GHz). Das Signal-Clutter-Verhältnis im SL-Bild betrug etwa zwischen 3 und 8 dB. Die Antennengeschwindigkeit betrug ca. 300 km/h oder 83 m/s, und es wurde eine Sequenz mit 30 Bildern erzeugt und verwendet. Die dabei ausgenutzte Dopplerbandbreite betrug 1500 Hz, das entspricht etwa 2,5 mal der Clutterbandbreite.

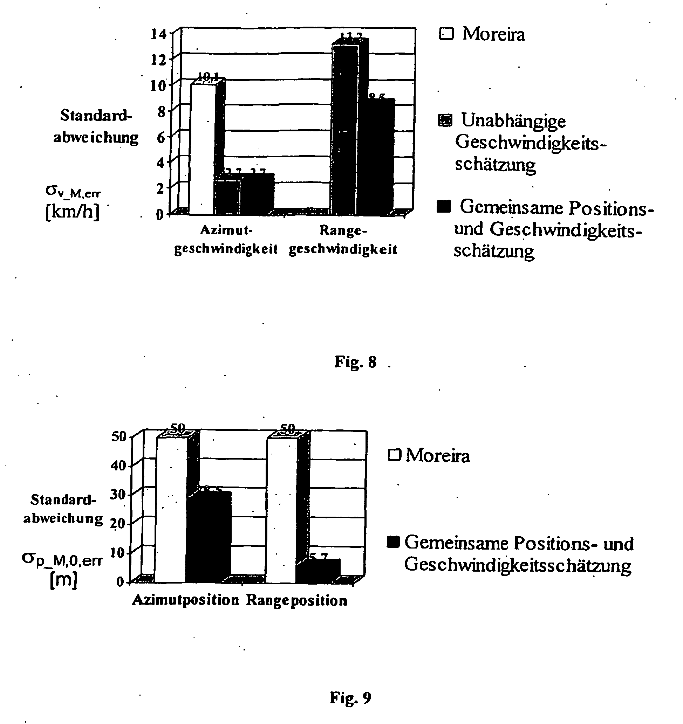

Die Azimutgeschwindigkeit $v_{Mx}$ konnte bei Objekten mit Azimutgeschwindigkeiten zwischen +/- 5 km/h (+/- 1,4 m/s) und +/- 120 km/h (+/- 33,3 m/s) mit einer Standardabweichung des Schätzfehlers von 2,7 km/h geschätzt werden. Für die Rangegeschwindigkeit betrug der ensprechende Wert 8,5 km/h für den Bereich zwischen +/-20 km/h (+/- 5,6 m/s) und +/- 120 km/h (+/- 33,3 m/s) (siehe Fig. 8). Im Vergleich zu den anderen aus der Literatur bekannten Verfahren wurde der Meßbereich für beide Geschwindigkeitskomponenten erweitert (siehe Fig. 7), wobei einige Bereiche (für kleine Geschwindigkeiten sowie der Bereich $|v_{Mx}|$ < 22 km/h und 80 km/h < $|v_{My}|$ < 120 km/h) erstmalig von einem Verfahren für Einkanal-SAR-Daten abgedeckt werden. Der obere Wert des Meßbereichs für die Rangegeschwindigkeit wurde dabei für die beim DOSAR-System verfügbare PRF von 1500 Hz bei einer Trägerfrequenz im C-Band (5,3 GHz) ermittelt.

Für die Detektionsrate ergibt sich folgendes: Im Bereich zwischen +/- 10 km/h (+/- 2,8 m/s) und +/- 80 km/h (+/- 22,2 m/s) werden 96% aller bewegten Objekte detektiert, bei einer höheren oder niedrigeren Geschwindigkeit mindestens 80%. Die Falsch-Alarm-Rate betrug etwa 2%. Detektions- und Falsch-Alarm-Rate können dabei leicht über die Mindestanzahl $K_{M,min}$ der Bilder, in denen ein Kandidat detektiert sein muß, sowie über die Geschwindigkeitsschwellwerte, geregelt werden. Bei den angegebenen Ergebnissen war die Mindestanzahl $K_{M,min}$ = 4 Bilder.

Bei der Positionsschätzung wurden folgende Ergebnisse erzielt (siehe Fig. 9): Die Standardabweichung des Schätzfehlers beträgt 28,5 m in Azimut und 5,7 m in Rangerichtung. Im Vergleich dazu sind in [6] für beide Komponenten ca. 50 m angegeben. Es ergibt sich also insgesamt sowohl für die geschätzte Geschwindigkeit als auch für die Position eine wesentliche Verbesserung gegenüber bisher bekannten Verfahren.

Dies spiegelt sich auch in den erzielten Bildergebnissen wieder. Fig. 10 zeigt ein beispielhaftes SL-Bild aus einer SAR-Bildsequenz (Fig. 10 a, detektierte bewegte Objekte sind mit einem weißen Quadrat markiert) im Vergleich zu einem kompensierten SL-Bild (b). Während im ursprünglichen Bild die bewegten Objekte verzerrt und abseits von der Straße erscheinen bzw. teilweise ganz verschwunden sind, sind diese Abbildungsfehler in Fig. 10 b) weitgehend kompensiert. Ähnliches zeigt sich auch im Fall von Multi-Look-Bildern. In Fig. 11 a) ist ein Multi-Look-Bild eines konventionellen SAR-Prozessors zu sehen, in dem die Verzerrungen der bewegten Objekte besonders deutlich hervortreten. Fig. 11 b) zeigt im Vergleich dazu ein kompensiertes Multi-Look-Bild, in dem die Objekte wieder weitgehend unverzerrt auf der Straße abgebildet werden.

Literatur

[1] R. K. Raney, "Synthetic aperture imaging radar and moving targets", IEEE Trans. Aerospace and Electronic Systems, Band AES-7, Nr. 3, pp. 499-505, Mai 1971.

[2] Y. Wang, R. Chellappa und Q. Zheng, "CFAR detection of targets in fully polarimetric SAR images", Technical Report, Department of Computer Science, University of Maryland, College Park, Nov. 1993.

[3] A. Freeman und A. Currie, "Synthetic aperture radar (SAR) images of moving targets", GEC Journal of Research, Band 5, Nr. 2,1987.

[4] E. D'Addio, M. Di Bisceglie und S. Bottalico, "Detection of moving objects with airborne SAR", Signal Processing, Band 36, Nr. 2, pp. 149-162, März 1994.

[5] S. Barbarossa and A. Farina: "Detection and imaging of moving objects with synthetic aperture radar, Part 2: Joint time-frequency analysis by Wigner-Ville distribution." In IEE Proceedings-F, Band 139, Nr. 1, pp. 89-97, Feb. 1992.

[6] J. R. Moreira and W. Keydel, "A new MTI-SAR approach using the reflectivity displacement method." IEEE Trans. Geoscience and Remote Sensing, Vol. 33, No. 5, pp. 1238-1244, Sept. 1995.

[7] M. Kirscht, "Detection, velocity estimation and imaging of moving targets with single—channel SAR." In Proc. of European Conference on Synthetic Aperture Radar, EUSAR'98, Friedrichshafen, Germany, pp. 587-590, May 1998.

[8] J. C. Curlander und R. N. McDonough: Synthetic Aperture Radar: Systems and Signal Processing, New York: John Wiley & Sons, 1991, S. 193f.

[9] M. Bierling, "Displacement estimation by hierarchical blockmatching", 3rd SPIE Symposium on Visual Communications and Image Processing, Cambridge, USA, pp. 942-951, 1988.

[10] K. Ouchi, "On the multilook images of moving targets by synthetic aperture radars", IEEE Trans. Antennas and Propagation, Band AP-33, Nr. 8, pp. 823-827, 1985.

[11] J. L. Melsa und D. L. Cohn, Decision and Estimation Theory, Tokyo, Japan: McGraw-Hill, 1978.

[12] J. A. Nelder und R. Mead, A Simplex Method for Function Minimization, Computer Journal, Nr. 7, S. 308-317, Juli 1964.

**Patentansprüche**

1. Verfahren zur Detektion sowie Geschwindigkeits- und Positionsschätzung von bewegten Objekten in SAR-Bildern, umfassend folgende Verfahrensschritte:

   - Generierung einer Sequenz von zeitlich aufeinanderfolgenden single-look SAR-Bildern gleicher Polarisation und einer von Bild zu Bild variierenden Lookmittenfrequenz;
   - Detektion von Kandidaten für bewegte Objekte in den single-look SAR-Bildern der Sequenz durch Suche nach Regionen mit gegenüber der Umgebung abweichendem Verlauf der Intensität;
   - Geschwindigkeitsschätzung der detektierten Kandidaten durch Schätzung eines oder mehrerer Verschiebungsvektoren jeweils eines Kandidaten unter Ausnutzung der Korrelation zwischen aufeinanderfolgenden single-look SAR-Bildern;
   - Verifikation der detektierten Kandidaten als bewegte Objekte,

   **dadurch gekennzeichnet, dass** die Schätzung einer oder mehrerer Geschwindigkeitskomponenten eines detektierten Kandidaten gemeinsam mit der Schätzung einer oder mehrerer Positionskomponenten des Kandidaten erfolgt, wobei unter Berücksichtigung der Positionen des Kandidaten in den einzelnen single-look SAR-Bildern der Sequenz eine von den zu schätzenden Komponenten abhängige Kostenfunktion aufgestellt wird, welche mittels einer Optimierungsmethode für den oder die zu schätzenden Parameter minimiert wird.

**2.** Verfahren nach Anspruch 1, **dadurch gekennzeichnet, dass** zur Aufstellung der Kostenfunktion zusätzlich die Amplituden der Kandidaten in den einzelnen Single-Look SAR-Bildern der Sequenz berücksichtigt werden.

**3.** Verfahren nach Anspruch 1 oder 2, **dadurch gekennzeichnet, dass** bei der Minimierung der Kostenfunktion ein weiterer zu schätzender Parameter zur Kompensation des Aliasing im Dopplerspektrum berücksichtigt wird.

**4.** Verfahren nach einem der vorangehenden Ansprüche, **dadurch gekennzeichnet, dass** aus den Azimutkomponenten der Verschiebungsvektoren eines Kandidaten ein Schätzwert für die Azimutkomponente des Geschwindigkeitsvektors des jeweiligen Kandidaten ermittelt wird, der bei der Optimierungsmethode zur gemeinsamen Positions- und Geschwindigkeitsschätzung der übrigen zu schätzenden Parameter konstant gehalten wird.

**5.** Verfahren nach einem der vorangehenden Ansprüche, **dadurch gekennzeichnet, dass** aus den einzelnen Rangepositionen eines Kandidaten in den einzelnen single-look SAR-Bildern ein Schätzwert für die Rangekomponente des Positionsvektors des jeweiligen Kandidaten ermittelt wird, der bei der Optimierungsmethode zur gemeinsamen Positions- und Geschwindigkeitsschätzung der übrigen zu schätzenden Parameter konstant gehalten wird.

**6.** Verfahren nach einem der vorangehenden Ansprüche, **dadurch gekennzeichnet, dass** bei der Detektion der Kandidaten jedem gefundenen Kandidaten die entsprechenden Regionen in den jeweiligen single-look SAR-Bildern als individuelle Initialformen zugeordnet werden.

**7.** Verfahren nach einem der vorangehenden Ansprüche, **dadurch gekennzeichnet, dass** entsprechend der geschätzten Geschwindigkeit eines Kandidaten die Form eines Kandidaten durch Entzerrung der jeweiligen Initialformen geschätzt wird.

**8.** Verfahren nach Anspruch 6 oder 7, **dadurch gekennzeichnet, dass** die Abbildungsfehler der bewegten Objekte innerhalb einer Sequenz der single-look SAR-Bilder kompensiert werden, dadurch, dass die bewegten Objekte mit den entsprechenden Initialformen aus den single-look SAR-Bildern extrahiert werden und an den geschätzten oder berechneten Positionen mittels der Initialformen oder der geschätzten Formen in die single-look SAR-Bilder wiedereingesetzt werden.

## Claims

**1.** Method for detection as well as speed and position estimation of moving objects in SAR images, comprising the following method steps:

- generation of a sequence of successive single-look SAR images with the same polarization and of a look mid-frequency, which varies from one image to the next;
- detection of candidates for moving objects in the single-look SAR images in the sequence by searching for regions with an intensity profile which differs from that of the surrounding area;
- speed estimation of the detected candidates by estimation of one or more shift vectors for each candidate using the correlation between successive single-look SAR images;
- verification of the detected candidates as moving objects,

**characterized in that** the estimation of one or more speed components of a detected candidate is carried out together with the estimation of one or more position components of the candidate, with a cost function which is dependent on the components to be estimated being set up taking into the account the positions of the candidate in the individual single-look SAR images in the sequence, and being minimized by means of an optimization method for the parameter or parameters to be estimated.

**2.** Method according to Claim 1, **characterized in that** the amplitudes of the candidates in the individual single-look SAR images in the sequence are also taken into account in order to set up the cost function.

**3.** Method according to Claim 1 or 2, **characterized in that** a further parameter to be estimated is taken into account, in order to compensate for the aliasing in the Doppler spectrum while minimizing the cost function.

**4.** Method according to one of the preceding claims, **characterized in that** an estimated value for the azimuth component of the speed vector of the respective candidate is determined from the azimuth components of the shift vectors of a candidate, and is kept constant during the optimization method for joint position and speed estimation of the other parameters to be estimated.

5. Method according to one of the preceding claims, **characterized in that** an estimated value for the range component of the position vector of the respective candidate is determined from the individual range positions of a candidate in the individual single-look SAR images and is kept constant during the optimization method for joint position and speed estimation of the other parameters to be estimated.

6. Method according to one of the preceding claims, **characterized in that** each candidate that is found during the detection of candidates is allocated the corresponding regions in the respective single-look SAR images as individual initial forms.

7. Method according to one of the preceding claims, **characterized in that** the form of a candidate is estimated by equalization of the respective initial forms, on the basis of the estimated speed of a candidate.

8. Method according to Claim 6 or 7, **characterized in that** the imaging errors of the moving objects within a sequence in the single-look SAR images are compensated for by extracting those moving objects with the corresponding initial forms from the signal-look SAR images and by reinserting them at the estimated or calculated positions, by means of the initial forms or the estimated forms, into the single-look SAR images.


**Revendications**

1. Procédé de détection et d'estimation de vitesse et de position d'objets en mouvement dans des images SAR, comprenant les étapes de procédé suivantes :

- génération d'une séquence d'images SAR mono-vue se succédant dans le temps et présentant une même polarisation et une fréquence centrale de vue variant d'image à image ;
- détection de candidats pour des objets en mouvement dans les images SAR mono-vue de la séquence par une recherche de zones présentant une évolution de l'intensité différente par rapport au voisinage ;
- estimation de la vitesse des candidats détectés par l'estimation d'un ou plusieurs vecteurs de déplacement de chacun des candidats en utilisant la corrélation entre les images SAR mono-vue successives ;
- vérification des candidats détectés en tant qu'objets en mouvement,

**caractérisé en ce que** l'estimation d'une ou plusieurs composantes de vitesse d'un candidat détecté s'effectue conjointement avec l'estimation d'une ou plusieurs composantes de position du candidat, une fonction des coûts dépendante des composantes à estimer étant établie compte tenu des positions du candidat dans les différentes images SAR mono-vue de la séquence, et étant minimisée au moyen d'une méthode d'optimisation pour le ou les paramètres à estimer.

2. Procédé selon la revendication 1, **caractérisé en ce que** l'on tient compte en outre des amplitudes des candidats dans les différentes images SAR mono-vue de la séquence afin d'établir la fonction des coûts.

3. Procédé selon la revendication 1 ou 2, **caractérisé en ce que** l'on tient compte, lors de la minimisation de la fonction des coûts, d'un autre paramètre à estimer afin de compenser le repliement dans le spectre Doppler.

4. Procédé selon l'une quelconque des revendications précédentes, **caractérisé en ce qu'**à partir des composantes azimutales des vecteurs de déplacement d'un candidat on détermine une valeur estimative pour la composante azimutale du vecteur vitesse du candidat respectif, laquelle est maintenue constante dans la méthode d'optimisation destinée à estimer ensemble la position et la vitesse des paramètres à estimer restants.

5. Procédé selon l'une quelconque des revendications précédentes, **caractérisé en ce qu'**à partir des différentes positions de distance d'un candidat dans les différentes images SAR mono-vue on détermine une valeur estimative pour la composante de distance du vecteur position du candidat respectif, laquelle est maintenue constante dans la méthode d'optimisation destinée à estimer ensemble la position et la vitesse des paramètres à estimer restants.

6. Procédé selon l'une quelconque des revendications précédentes, **caractérisé en ce que** lors de la détection des candidats les zones correspondantes dans les images SAR respectives sont associées en tant que formes initiales individuelles à chaque candidat trouvé.

7. Procédé selon l'une quelconque des revendications précédentes, **caractérisé en ce que** la forme d'un candidat est estimée par correction des formes initiales respectives en fonction de la vitesse estimée du candidat.

8. Procédé selon la revendication 6 ou 7, **caractérisé en ce que** les erreurs d'imagerie des objets en mouvement dans une séquence des images SAR mono-vue sont compensées par le fait que les objets en mouvement sont extraits des images SAR mono-vue avec les formes initiales correspondantes et sont réutilisés au moyen des formes initiales ou des formes estimées dans les images SAR mono-vue aux positions estimées ou calculées.

a)

Dopplerspektrum

$f_D$

$f^{(k)}$ ... $f^{(k)}$ $f^{(7)}$ $f^{(6)}$ $f^{(5)}$ $f^{(4)}$ $f^{(3)}$ $f^{(2)}$ $f^{(1)}$

$-f_D/2$ $f_D/2$

$t^{(k)}$ ... $t^{(1)}$

$f_D$

R (Range)

vor Rangemigration-Korrektur

b)

Dopplerspektrum

$f_D$

$f^{(k)}$ ... $f^{(k)}$ $f^{(7)}$ $f^{(6)}$ $f^{(5)}$ $f^{(4)}$ $f^{(3)}$ $f^{(2)}$ $f^{(1)}$

$-f_D/2$ $f_D/2$

$t^{(k)}$ ... $t^{(1)}$

$f_D$

R (Range)

nach Rangemigration-Korrektur

**Fig. 1**

Bild k-1

$t^{(k-1)}$

Suchbereich

$t^{(k)}$

Bild k

$\bar{D}^{(k)}$

Kandidat

$\bar{D}^{(k)}$

Referenzblock

t

Position maximaler Korrelation

Displacementvektor $\bar{D}^{(k)}$

**Fig. 2**

**Fig. 3**

**Fig. 4**

**Fig. 5**

a)

Wiederholung
des Clutter-
spektrums

bewegtes
Objekt

$|R(f_D)|$

statisches
Objekt
(Clutter)

Wiederholung
des Spektrums
des bewegten
Objekts

$-f_p$   $-\dfrac{f_p}{2}$   $0$   $\dfrac{f_p}{2}$   $f_D$

$|f_M|$

a = 1       a = 0       a = 1

b)

Wiederholung
des Spektrums
des bewegten
Objekts

statisches
Objekt
(Clutter)

$|R(f_D)|$

bewegtes
Objekt

Wiederholung
des Clutter-
spektrums

$-\dfrac{f_p}{2}$   $0$   $\dfrac{f_p}{2}$   $f_p$   $f_D$

$f_M$

a = -1       a = 0       a = -1

**Fig. 6**

$v_{My}$ (Range) [km/h]

$v_{Mx}$ (Azimut)
[km/h]

Verfahren
[3], [4], [5]

Verfahren
[6] (Moreira)

erfindungsgemäßes
Verfahren

**Fig. 7**

20

Fig. 8

Fig. 9

a)     b)

FIG. 10

Fig. 11 a)

Fig. 11 b)